# EUROPÄISCHE PATENTANMELDUNG

(11) **EP 2 402 194 A1**
(43) Veröffentlichungstag der Anmeldung: **04.01.2012**
(21) Anmeldenummer: 10167707.8
(22) Anmeldetag: 29.06.2010
(51) Int. Cl.: B60K 5/12, B60R 21/34

(54) **Motorlagerungseinheit zur Anordnung einer Motoreinheit eines Kraftfahrzeuges an einem Fahrzeugträger sowie Integralträger für Kraftfahrzeuge**

(71) Anmelder: ISE Automotive GmbH, 51702 Bergneustadt (DE)
(72) Erfinder: Günther, Stefan, 53783, Eitorf (DE)
(74) Vertreter: Peters, Arijit Christian

(57) **Zusammenfassung**

Die Erfindung betrifft eine Motorlagerungseinheit zur Anordnung einer Motoreinheit eines Kraftfahrzeugs an einem Fahrzeugträger, mit einem mit dem Fahrzeugträger verbindbaren Trägerteil und einem mit der Motoreinheit verbindbaren Motorteil. Um eine Motorlagerungseinheit sowie einen Integralträger mit einer Motorlagerungseinheit bereitzustellen, die es ermöglichen, im Falle eines Personenaufpralls auf die Motorhaube einen ergänzenden Deformationsbereich zum Abbau von Energie bereitzustellen, ist vorgesehen, dass das Motorteil zur Verlagerung der Motoreinheit im Falle eines Motorhaubenaufschlags einer Person relativ gegenüber dem Trägerteil zwischen einer Normallage und einer gegenüber der Normallage abgesenkten Crashlage verstellbar ist.

## Beschreibung

Die Erfindung betrifft eine Motorlagerungseinheit zur Anordnung einer Motoreinheit eines Kraftfahrzeuges an einem Fahrzeugträger sowie einen Integralträger für Kraftfahrzeuge, mit einer Motorlagerungseinheit, wobei diese ein mit dem Fahrzeugträger verbindbares Trägerteil und ein mit der Motoreinheit verbindbares Motorteil aufweist.

Motorlagerungseinheiten der Eingangs genannten Art sind aus dem Stand der Technik hinlänglich bekannt. Sie dienen der Verbindung der Motoreinheit eines Kraftfahrzeuges mit dem die Motoreinheit sowie ggf. Zusatzaggregate tragenden Fahrzeugträger, bspw. einem Fahrzeugintegralträger. Die Motorlagerungseinheiten können dabei bereits integraler Bestandteil der Fahrzeugträger, aber auch als separate Baueinheiten ausgeführt sein, mittels derer die Motoreinheit an dem Fahrzeugträger befestigt werden kann.

Bekannte Motorlagerungseinheiten, bzw. Fahrzeugträger mit Motorlagerungseinheiten stellen sicher, dass nach der Montage der Motoreinheit an dem Fahrzeugträger die Motoreinheit relativ zum Fahrzeugträger an diesem arretiert ist, wobei jedoch Verschiebungen zur Schwingungsdämpfungen vorgesehen werden können.

Aufgrund der zunehmend flacheren Bauweise der Fahrzeugfrontmodule moderner Fahrzeuge verläuft eine die Motoreinheit abdeckende Motorhaube des Kraftfahrzeuges mittlerweile unmittelbar oberhalb der Motoreinheit. Dies hat im Falle eines Motorhaubenaufschlags eines Fußgängers zur Folge, dass nur ein sehr geringer, zwischen der Unterseite der Motorhaube und der Oberseite der Motoreinheit verlaufender Deformationsbereich zum Abbau der Aufprallenergie zur Verfügung steht. Hieraus resultiert ein nur unzureichender Fußgängerschutz im Falle eines Aufpralls des Fußgängers auf die Motorhaube, so dass eine nur sehr geringe Möglichkeit besteht, die Schwere der Verletzungen durch einen Abbau der Aufprallenergie zu verringern.
Der Erfindung liegt die Aufgabe zugrunde, eine Motorlagerungseinheit sowie einen Integralträger mit einer Motorlagerungseinheit bereitzustellen, die es ermöglichen, im Falle eines Personenaufpralls auf die Motorhaube einen ergänzenden Deformationsbereich zum Abbau von Energie bereitzustellen.

Die Erfindung löst die Aufgabe durch eine Motorlagerungseinheit mit den Merkmalen des Anspruchs 1 sowie einen Integralträger mit den Merkmalen des Anspruchs 15. Vorteilhafte Weiterbildungen der Erfindung sind in den abhängigen Ansprüchen angegeben.

Kennzeichnend für die erfindungsgemäße Motorlagerungseinheit ist, dass das Motorteil, welches zur Anordnung der Motoreinheit an der Motorlagerungseinheit vorgesehen ist, zur Verlagerung der Motoreinheit im Falle eines Motorhaubenaufschlags einer Person relativ gegenüber dem zur Verbindung der Motorlagerungseinheit mit dem Fahrzeugträger vorgesehenen Trägerteil zwischen einer Normallage und einer gegenüber der Normallage abgesenkten Crashlage verstellbar ist.

Die erfindungsgemäße Motorlagerungseinheit ermöglicht es somit, die Motoreinheit relativ gegenüber dem Fahrzeugträger aus der Normallage in die Crashlage zu verstellen, in der die Motoreinheit in der Einbaulage am Fahrzeug gegenüber der Normallage einen höheren Abstand zur Unterseite der Motorhaube aufweist. Folglich besteht ein zusätzlicher Deformationsbereich zum Abbau der Aufprallenergie der Person zur Verfügung, durch den die Schwere der Personenverletzungen reduziert werden kann. Die Verlagerung der Motoreinheit erfolgt dabei durch eine Verstellung des Motorteils gegenüber dem Trägerteil, welche durch eine entsprechende, den Motorhaubenaufschlag der Person erkennende Sensorik ausgelöst wird.

Die Ausgestaltung der Verbindung zwischen dem Motorteil und dem Trägerteil derart, dass diese so gegeneinander verstellt werden können, dass in der Einbaulage die Motoreinheit in eine gegenüber der Motorhaube abgesenkte Crashlage verstellt wird, kann grundsätzlich in beliebiger Weise erfolgen. Besonders vorteilhafterweise sind das Motorteil und das Trägerteil jedoch gelenkig, insbesondere drehgelenkig miteinander verbunden. Diese Ausgestaltung der Erfindung lässt sich besonders einfach realisieren. Die gelenkige Verbindung des Motorteils und Trägerteils ist dabei derart ausgeführt, dass die Verlagerung des Motorteils gegenüber dem Trägerteil aus der Normallage in die Crashlage entsprechend der durch die gelenkige, bspw. eine scharnierartige Verbindung vorgegebene Bewegungsbahn erfolgt. Im Falle einer drehgelenkigen Verbindung von Motorteil und Trägerteil erfolgt dabei eine Schwenkbewegung des Motorteils gegenüber dem Trägerteil um den diese verbindenden Gelenkpunkt. Die drehgelenkige Verbindung stellt dabei eine besonders kostengünstige Realisierung der Verschiebbarkeit dar, wobei in der einfachsten Ausführungsform die drehgelenkige Verbindung bspw. über einen Motorteil und Trägerteil verbindenden Gelenkbolzen erreicht werden kann.

Gemäß einer weiteren Ausgestaltung der Erfindung ist das Motorteil gelenkig mit der Motoreinheit und/oder das Trägerteil gelenkig mit dem Fahrzeugträger verbunden. Diese gelenkige Anordnung von Motorteil und/oder Trägerteil mit der Motoreinheit bzw. dem Fahrzeugträger kann ergänzend oder alternativ zur gelenkigen Verbindung von Motorteil und Trägerteil erfolgen. Die Bewegungsbahn zwischen der Normallage und der Crashlage bestimmt sich dabei aus einer Überlagerung der unterschiedlichen Bewegungen der einzelnen Bauteile entsprechend ihrer jeweiligen gelenkigen Verbindung zueinander. In einer einfachsten Ausführungsform der Erfindung kann bereits eine gelenkige Verbindung des Motorteils mit der Motoreinheit oder des Trägerteils mit dem Fahrzeugträger eine Verstellung der Motoreinheit aus der Normallage in die Crashlage ermöglichen. Gemäß dieser Ausgestaltung der Erfindung lassen sich somit besonders einfach und kostengünstig entsprechend der konstruktiven Anforderungen Bewegungsabläufe der Motorlagerungseinheit aus der Normallage in die Crashlage realisieren.

Nach einer weiteren Ausgestaltung der Erfindung ist das Motorteil verschiebbar und/oder verdrehbar gegenüber dem Trägerteil. Im Falle einer verdrehbaren Lagerung erfolgt eine Verstellung der Motoreinheit relativ gegenüber dem Trägerteil aus der Normallage in die Crashlage durch eine Verdrehung des Motorteils relativ gegenüber dem am Fahrzeugträger festgelegten Trägerteil. Aus der Verdrehbewegung resultiert dabei eine Absenkbewegung der mit dem Motorteil verbundenen Motoreinheit. Über den Verdrehwinkel lässt sich in besonders einfacher Weise die Absenkbewegung der Motoreinheit festlegen. Im Falle einer verschiebbaren Lagerung des Motorteils gegenüber dem Trägerteil erfolgt eine Verlagerung der Motoreinheit aus der Normallage in die Crashlage in Folge einer Verschiebung des Trägerteils gegenüber dem Motorteil. Über die Länge des Verschiebewegs lässt sich dabei die Absenkbewegung der Motoreinheit festlegen.

Die Ausgestaltung der Verschiebbarkeit kann grundsätzlich in beliebiger Weise erfolgen. Besonders vorteilhafterweise weist jedoch das Motorteil eine Führung, insbesondere Linearführung auf, in der das korrespondierend ausgebildete Trägerteil verschiebbar gelagert ist. Die Verwendung einer Führung gemäß dieser Ausgestaltung der Erfindung ermöglicht eine besonders zuverlässige und sichere Verlagerung der Motoreinheit in die Crashlage. Bei einer entsprechenden Ausgestaltung der Führung gewährleistet diese überdies, dass es allein zu einer Linearverschiebung der Motoreinheit gegenüber dem Fahrzeugträger kommt. Unerwünschten Kipp- oder Torsionsbewegungen der Motoreinheit kann somit in ergänzender Weise vorgebeugt werden, wobei hierbei besonders vorteilhafterweise eine Schwalbenschwanzführung eine besonders hohe Sicherheit bietet.

Nach einer weiteren Ausgestaltung der Erfindung sind das Motorteil und das Trägerteil koaxial zueinander verschiebbar aneinander angeordnet. Demgemäß erfolgt eine Verschiebung des Motorteils in die Crashlage gegenüber dem Trägerteil bei koaxialer Anordnung der Teile zueinander. Bei einer entsprechenden Ausgestaltung kann die Koaxialität der Teile zueinander als Führungen genutzt werden, wodurch in besonders zuverlässiger Weise die Verstellbewegung der Motoreinheit auf vorbestimmtem Wege erfolgen kann.

Grundsätzlich besteht die Möglichkeit, das Motorteil und/oder das Trägerteil direkt mit der Motoreinheit, bzw. dem Fahrzeugträger zu verbinden. Nach einer vorteilhaften Ausgestaltung der Erfindung weisen jedoch das Motorteil zur Verbindung mit der Motoreinheit und/oder das Trägerteil zur Verbindung mit dem Fahrzeugträger ein gelenkig verbundenes Kopplungselement auf. Die Verwendung entsprechender Elemente ermöglicht es, insbesondere bei der Ausgestaltung der Kopplungselemente entsprechend derzeit bekannter Motorlagerungseinheiten bzw. -aufnahmen, auf eine Anpassung der Anordnungsbereiche der Fahrzeugträger oder Motoreinheiten zu verzichten. Diese können somit in bekannter Weise an die Motorlagerungseinheit angeschlossen werden, wobei über die Kopplungselemente eine funktionale Verbindung zur Motorlagerungseinheit hergestellt wird. Eine derart ausgestaltete Motorlagerungseinheit lässt sich somit in besonders einfacher Weise mit bestehenden Fahrzeugkomponenten verbinden.

Die Arretierung der Motorlagerungseinheit in der Normallage, d. h. eine Sicherung der Position des Motorteils relativ gegenüber dem Trägerteil in der Normallage kann grundsätzlich mit beliebigen Vorrichtungen erreicht werden. Nach einer vorteilhaften Ausgestaltung der Erfindung ist jedoch eine in der Normallage das Motorteil gegenüber dem Trägerteil festlegende Arretierungseinheit vorgesehen, die im Crashfall in eine das Motorteil gegenüber dem Trägerteil freigegebene Entriegelungsposition verstellbar ist. Die Verwendung einer separaten Arretierungseinheit ermöglicht es, diese ereignisabhängig zu bedienen, wodurch in besonders zuverlässiger Weise im Bedarfsfall eine Verstellmöglichkeit des Motorteils gegenüber dem Trägerteil erreicht wird. Insbesondere kann die Arretierungseinheit direkt mit entsprechenden Sensoreinheiten verbunden werden, welche der Detektierung eines Motorhaubenaufschlags einer Person dienen. Die Arretierungseinheit sichert somit zuverlässig die Position des Motorteils gegenüber dem Trägerteil in Normallage und gewährleistet ebenso, dass im Crashfall eine Verlagerung des Motorteils gegenüber dem Trägerteil erfolgt.

Die Ausgestaltung der Arretierungseinheit, bzw. deren Wirkungsweise bei der Arretierung des Motorteils an dem Trägerteil kann dabei in vielfältiger Weise erfolgen. Denkbar sind hierbei bspw. auch elektromagnetisch wirkende Halteelemente.

Nach einer Weiterbildung der Erfindung weist die Arretierungseinheit jedoch einen in der Normallage mit dem Motorteil und dem Trägerteil in Eingriff befindlichen Haltebolzen auf, der im Crashfall mit dem Trägerteil und/oder dem Motorteil außer Eingriff bringbar ist. Gemäß dieser Ausgestaltung der Erfindung arretiert der Haltebolzen aufgrund seines Eingriffs mit dem Motorteil und dem Trägerteil diese relativ zueinander und verhindert damit eine Verstellbewegung in die Crashlage. Durch eine einfach zu realisierende Verstellbewegung des Haltebolzens kann dieser in die Position verlagert werden, in der zwischen dem Haltebolzen und dem Trägerteil und/oder dem Haltebolzen und dem Motorteil kein Eingriff mehr besteht, so dass die sperrende Wirkung des Haltebolzens aufgehoben wird. Der Haltebolzen lässt sich besonders einfach und kostengünstig realisieren. Darüber hinaus lässt sich auch eine Verstellbewegung des Haltebolzens in kostengünstiger Weise an der Arretierungseinheit oder separat ausbilden. Besonders vorteilhafterweise ist der Haltebolzen jedoch über eine Aktuatoreinheit, insbesondere einen pyrotechnischen Aktuator oder ein Magnetventil verstellbar. Diese zeichnen sich durch eine besonders kurze Reaktionszeit aus, so dass im Bedarfsfall besonders zuverlässig gewährleistet werden kann, dass die Motoreinheit vor dem Aufprall der Person auf die Motorhaube bzw. vor Erreichen einer Position, bei der die Unterseite der Motorhaube in Kontakt mit der Motoreinheit gelangt, diese in eine abgesenkte Position verstellt ist.

Zur Verstellung des Motorteils gegenüber dem Trägerteil in die Crashlage können grundsätzlich Antriebselemente, bspw. vorgespannte Federelemente eingesetzt werden, deren Wirkung nach einer Freigabe der Bewegung des Motorteils gegenüber dem Trägerteil eine Verschiebung bewirken. Nach einer vorteilhaften Weiterbildung der Erfindung ist das Motorteil in der Fahrzeugeinbaulage jedoch in Richtung auf die Crashlage vorbelastet an dem Trägerteil angeordnet. Gemäß diesem Merkmal der Erfindung resultiert die Verlagerung des Motorteils nach Freigabe gegenüber dem Trägerteil allein aus der Gewichtskraft des Motorsteils bzw. der an dem Motorteil angeordneten Motoreinheit. Auf eine Antriebseinheit kann somit verzichtet werden, so dass ein besonders einfacher und kostengünstiger Aufbau der Motorlagerungseinheit realisierbar ist.

Die Motorlagerungseinheit kann als separate Baueinheit ausgeführt sein, bei der das Motorteil mit der Motoreinheit und das Trägerteil mit dem Fahrzeugträger verbunden wird. Nach einer Weiterbildung der Erfindung ist das Motorteil jedoch einstückig mit der Motoreinheit und/oder das Trägerteil einstückig mit dem Fahrzeugträger ausgebildet. Gemäß dieser Ausgestaltung der Erfindung kann die Anzahl der Bauteile der Motorlagerungseinheit in ergänzender Weise reduziert und somit die Kosten verringert werden. Auch wird der Montageaufwand verringert, nachdem auf eine Anordnung des Motorteils an der Motoreinheit und/oder des Trägerteils am Fahrzeugträger verzichtet werden kann.

Nach einer weiteren Ausgestaltung der Erfindung weist das Motorteil und/oder das Trägerteil ein Dämpfungselement auf. Das Dämpfungselement, welches in eines der beiden Bauteile oder auch in beide integriert sein kann, dient in der Normallage dazu, Stöße zwischen dem Fahrzeugträger und der Motoreinheit zu dämpfen. Gleichzeitig können diese Dämpfungselemente als Schwingungsdämpfer eingesetzt werden, so dass auf entsprechende, separate Dämpfungselemente zur Anordnung der Motoreinheit an dem Fahrzeugträger verzichtet werden kann. Auch ist es denkbar, die Dämpfungselemente derart anzuordnen, dass sie die Verlagerungsbewegung der Motoreinheit im Bereich um die Crashlage dämpfen, um so Beschädigungen der Fahrzeugkomponenten vorzubeugen.

Die grundsätzliche Funktion der erfindungsgemäßen Motorlagerungseinheit wird bereits durch die Verlagerbarkeit des Motorteils aus der Normallage in die Crashlage erreicht, nachdem hierdurch der Abstand zwischen der Motorhaubenunterseite und der Motoreinheit gegenüber der Normallage vergrößert wird, wodurch ein verbesserter Deformationsbereich geschaffen wird. Nach einer weiteren Ausgestaltung der Erfindung ist vorgesehen, dass das Motorteil derart mit dem Trägerteil verbunden ist, dass das Motorteil aus der Crashlage in die Normallage verstellbar ist. Die sich hieraus ergebende Reversierbarkeit der Motorlagerungseinheit ermöglicht nach einem Austausch der Motorhaube die Wiederherstellung der Normallage, so dass auf weitere, u. U. kostenintensive Zusatz- und/oder Austauscharbeiten verzichtet werden kann. In Abhängigkeit von der Ausgestaltung der Motorlagerungseinheit sowie ggf. vorgesehener Arretierungseinheiten ist es allenfalls erforderlich, zur Auslösung vorgesehene einzelne Bauteile, wie z.B. einen pyrotechnischen Aktuator oder dergleichen auszutauschen, um nach dem Ersatz einer beschädigten Motorhaube wieder den Zustand vor einem Crash herzustellen.

Kennzeichnend für den erfindungsgemäßen Integralträger für Kraftfahrzeuge, welcher mit einer Motorlagerungseinheit mit einer oder mehreren der o. g. Merkmale ausgebildet ist, ist, dass die Motorlagerungseinheit integraler Bestandteil des Fahrzeugträgers, insbesondere eines Integralträgers ist. Gemäß dieser Ausgestaltung der Erfindung kann auf einen separaten Motorlagerungsträger verzichtet werden. Hierdurch kann die Bauteilanzahl zur Anordnung der Motoreinheit an dem Fahrzeugträger, bzw. Integralträger, in ergänzender Weise reduziert werden, so dass insgesamt eine kostengünstige Anordnungsmöglichkeit besteht. Als Fahrzeugträger werden dabei im Rahmen der Erfindung alle Arten von Tragelementen verstanden, insbesondere Integralträger, welche zur Aufnahme der Motoreinheit am Fahrzeug dienen.

Nachfolgend werden Ausführungsbeispiele der Erfindung anhand von Zeichnungen erläutert. In den Zeichnungen zeigen:
- Fig. 1: eine Skizze einer ersten Ausführungsform einer Motorlagerungseinheit in einer Normallage und in einer Crashlage;
- Fig. 2: eine Skizze einer perspektivischen Ansicht einer zweiten Ausführungsform einer Motorlagerungseinheit;
- Fig. 3a, 3b: als Skizze in einer Draufsicht und einer Seitenansicht eine dritte Ausführungsform einer Motorlagerungseinheit und
- Fig. 4: eine Skizze einer vierten Ausführungsform einer Motorlagerungseinheit.

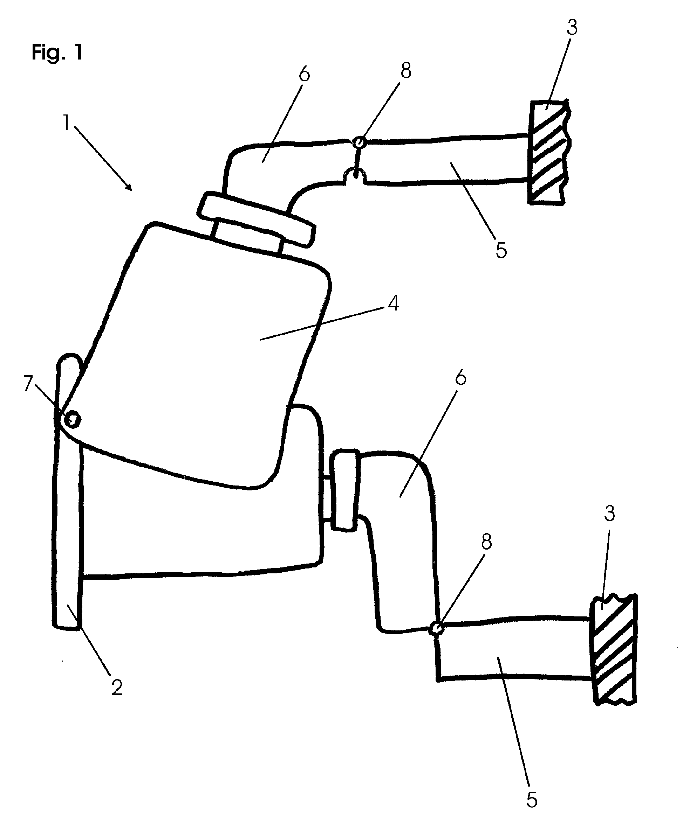

Die in Fig. 1 in einer Normallage sowie einer Crashlage dargestellte Motorlagerungseinheit 1 weist ein Motorteil 5 sowie ein Trägerteil 4 auf, welche über ein gesperrtes Scharnier 8 gelenkig miteinander verbunden sind. Das Motorteil 5 ist seinerseits starr mit dem Trägerteil 4 über ein Gelenk 7 gelenkig mit dem Fahrzeugträger 2, bspw. einem Integralträger, verbunden. In der Normallage liegt ein Ausleger 6 des Trägerteils 4 mit einer Stirnseite flächig an einer Stirnseite des Motorteils 5 an. Zur Verstellung der Motoreinheit 3 in die Crashlage erfolgt eine Freigabe des arretierten Scharniers 8, so dass das Trägerteil 4 aufgrund der wirkenden Gewichtskraft in die zweite Position verschwenkt wird, wobei die Motoreinheit 3 in eine gegenüber der Normallage abgesenkte Position gelangt. Die Anlage des Trägerteils 4 an den Fahrzeugträger 2 in der Crashlage bestimmt dabei die abgesenkte Position der Motoreinheit 3. Eine Freigabe des Scharniers 8 erfolgt dabei über eine hier nicht dargestellte Arretierungseinheit.

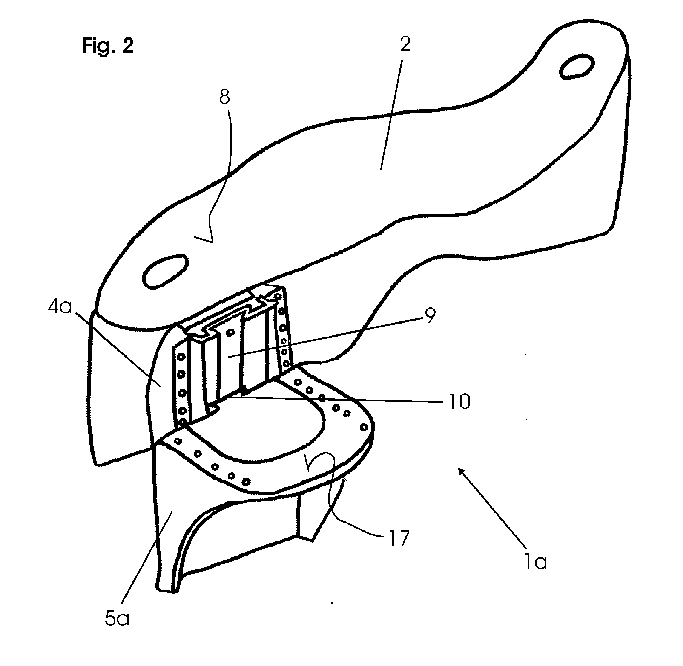

In Fig. 2 ist eine zweite Ausführungsform einer Motorlagerungseinheit 1a dargestellt. Das Trägerteil 4a weist eine Führung 9 auf, welche eine schwalbenschwanzartige Aufnahme bereitstellt. Das Motorteil 5a ist über einen an die Führung 9 angepaßten Führungsabschnitt 10 in der Führung 9 gelagert, so dass eine mit dem Motorteil 5a verbundene, hier nicht dargestellte Motoreinheit aus einer Normallage, in der das Motorteil 5a mit seiner Oberseite 17 im Wesentlichen bündig mit der Oberseite 18 des Fahrzeugträgers 2 verläuft, in die in Fig. 2 dargestellte Crashlage verschiebbar ist. Eine Festlegung des Motorteils 5a an dem Trägerteil 4a in der Normallage erfolgt dabei ebenfalls wie im zuvor dargestellten Ausführungsbeispiel über eine hier nicht dargestellte Arretierungseinheit, bei der über einen Haltebolzen das Motorteil 5a in der Normallage an dem Trägerteil 4a arretiert ist.

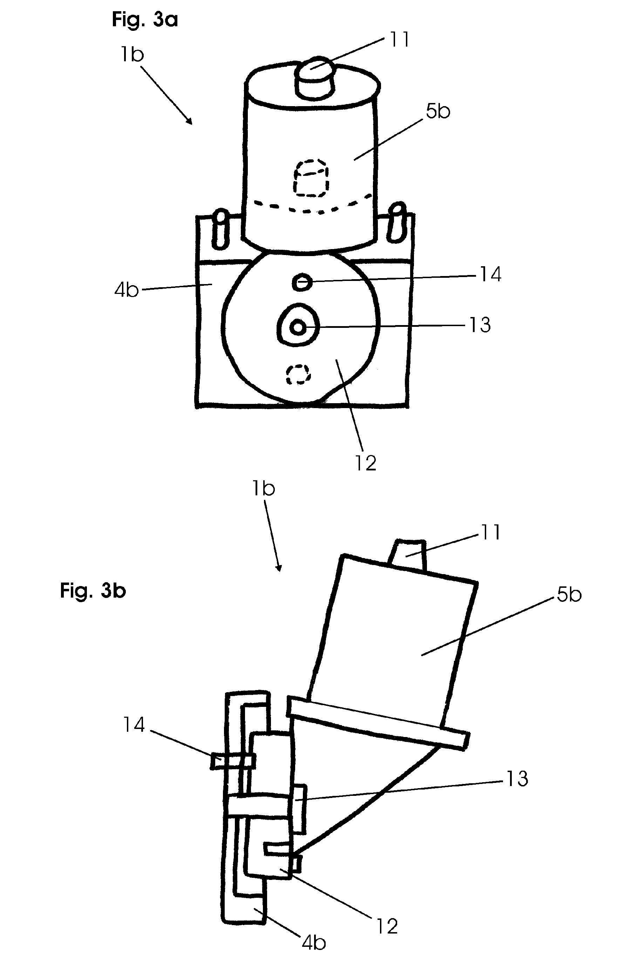

Bei der in Fig. 3a und 3b dargestellten Ausführungsform einer Motorlagerungseinheit 1b weist das Trägerteil 4b eine kreisförmige Ausnehmung auf, in der eine kreisrunde Platte 12 des Motorteils 5b über einen Lagerstift 13 drehbar gelagert ist. Die in Fig. 3a und 3b dargestellte Normallage des Motorteils 5b gegenüber dem Trägerteil 4b wird durch einen Haltebolzen 14 gesichert, der sich in einer Bohrung durch das Trägerteil 4b und eine entsprechende Bohrung in der kreisrunden Platte 12 erstreckt. Um eine Verstellung des Motorteils 5b in eine hier nicht dargestellte Crashlage zu ermöglichen, ist der Haltebolzen 14 durch eine hier nicht dargestellte Arretierungseinheit rückziehbar, wobei der Haltebolzen 14 mit der kreisrunden Platte außer Eingriff gelangt, so dass eine Verdrehung des Motorteils 5b gegenüber dem Trägerteil 4b erfolgen kann.

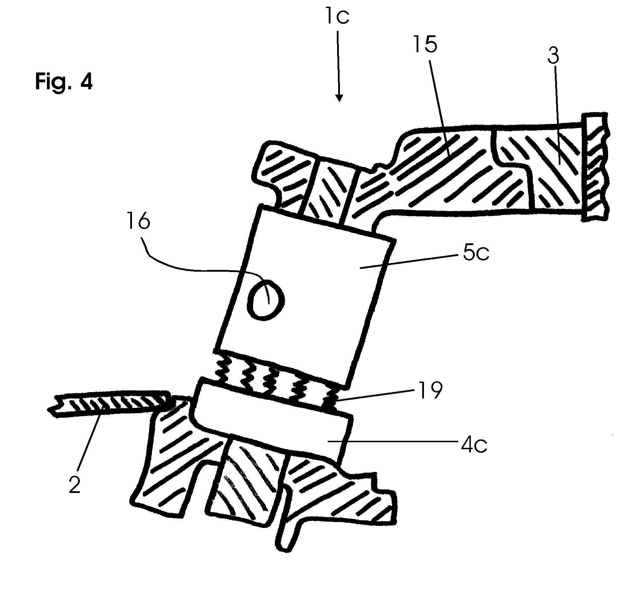

In Fig. 4 ist ein weiteres Ausführungsbeispiel einer Motorlagerungseinheit 1c dargestellt. Das über einen Lagerbock 15 mit der Motoreinheit 3 verbundene Motorteil 5c ist zur Verstellung aus der dargestellten Normallage in Richtung auf das Trägerteil 4c verschiebbar, wobei die Position des Motorteils 5c relativ gegenüber dem Trägerteil 4c in der Normallage durch ein Magnetventil 16 gehalten ist. Im Falle einer Auslösung des Magnetventils 16 kommt es zu einer Verlagerung aus der in Fig. 4 dargestellten Normallage, wobei zwischen dem Motorteil 5c und dem Trägerteil 4c angeordneten Federelemente die Verstellbewegung dämpfen.

Gemäß einer weiteren, hier nicht dargestellten Ausführungsform der Erfindung kann ein Magnetventil auch zur Anbindung des Lagerbocks 15 an der Motoreinheit 3 verwendet werden. Ausgelöst durch eine Sensorik kann ein Stift des Magnetventils zurückgezogen werden, so dass der Motor nach unten fällt.

## Patentansprüche

1. Motorlagerungseinheit zur Anordnung einer Motoreinheit eines Kraftfahrzeugs an einem Fahrzeugträger, mit einem mit dem Fahrzeugträger verbindbaren Trägerteil und einem mit der Motoreinheit verbindbaren Motorteil,
**dadurch gekennzeichnet, dass**
das Motorteil (5) zur Verlagerung der Motoreinheit (3) im Falle eines Motorhaubenaufschlags einer Person relativ gegenüber dem Trägerteil (4) zwischen einer Normallage und einer gegenüber der Normallage abgesenkten Crashlage verstellbar ist.

2. Motorlagerungseinheit nach Anspruch 1, **dadurch gekennzeichnet, dass** das Motorteil (5) und das Trägerteil (4) gelenkig, insbesondere drehgelenkig miteinander verbunden sind.

3. Motorlagerungseinheit nach Anspruch 1 oder 2, **dadurch gekennzeichnet, dass** das Motorteil (5) gelenkig mit der Motoreinheit (3) und/oder das Trägerteil (4) gelenkig mit dem Fahrzeugträger (2) verbunden ist.

4. Motorlagerungseinheit nach einem der vorhergehenden Ansprüche, **dadurch gekennzeichnet, dass** das Motorteil (5) gegenüber dem Trägerteil (4) verschiebbar und/oder verdrehbar ist.

5. Motorlagerungseinheit nach einem der vorhergehenden Ansprüche, **dadurch gekennzeichnet, dass** das Motorteil (5) eine Führung (9), insbesondere Linearführung aufweist, in der das korrespondierend ausgebildete Trägerteil (4) verschiebbar gelagert ist.

6. Motorlagerungseinheit nach einem der vorhergehenden Ansprüche, **dadurch gekennzeichnet, dass** das Motorteil (5) und das Trägerteil (4) koaxial zueinander verschiebbar aneinander angeordnet sind.

7. Motorlagerungseinheit nach einem der vorhergehenden Ansprüche, **dadurch gekennzeichnet, dass** das Motorteil (5) zur Verbindung mit der Motoreinheit (3) und/oder das Trägerteil (4) zur Verbindung mit dem Fahrzeugträger (2) ein gelenkig verbundenes Kopplungselement aufweisen.

8. Motorlagerungseinheit nach einem der vorhergehenden Ansprüche, **gekennzeichnet durch** eine in der Normallage das Motorteil (5) gegenüber dem Trägerteil (4) festlegende Arretierungseinheit, die im Crashfall in eine das Motorteil (5) gegenüber dem Trägerteil (4) freigebende Entriegelungsposition verstellbar ist.

9. Motorlagerungseinheit nach einem der vorhergehenden Ansprüche, **dadurch gekennzeichnet, dass** die Arretierungseinheit einen in der Normallage mit dem Motorteil (5) und dem Trägerteil (4) in Eingriff befindlichen Haltebolzen (14) aufweist, der im Crashfall mit dem Trägerteil (5) und/oder dem Motorteil außer Eingriff bringbar ist.

10. Motorlagerungseinheit nach einem der vorhergehenden Ansprüche, **dadurch gekennzeichnet, dass** der Haltebolzen (15) über eine Aktuatoreinheit, insbesondere einen pyrotechnischen Aktuator oder ein Magnetventil (16) verstellbar ist.

11. Motorlagerungseinheit nach einem der vorhergehenden Ansprüche, **dadurch gekennzeichnet, dass** das Motorteil (5) in der Fahrzeugeinbaulage in Richtung auf die Crashlage vorbelastet an dem Trägerteil (4) angeordnet ist.

12. Motorlagerungseinheit nach einem der vorhergehenden Ansprüche, **dadurch gekennzeichnet, dass** das Motorteil (5) einstückig mit der Motoreinheit (3) und/oder das Trägerteil (4) einstückig mit dem Fahrzeugträger (2) ausgebildet ist.

13. Motorlagerungseinheit nach einem der vorhergehenden Ansprüche, **dadurch gekennzeichnet, dass** das Motorteil (5) und/oder das Trägerteil (4) ein Dämpfungselement aufweist.

14. Motorlagerungseinheit nach einem der vorhergehenden Ansprüche, **dadurch gekennzeichnet, dass** das Motorteil (5) derart mit dem Trägerteil (4) verbunden ist, dass das Motorteil (5) aus der Crashlage in die Normallage verstellbar ist.

15. Integralträger für Kraftfahrzeuge, mit einer Motorlagerungseinheit gemäß einem oder mehreren der Ansprüche 1-14, **dadurch gekennzeichnet, dass** die Motorlagerungseinheit (1) integraler Bestandteil des Fahrzeugträgers (2), insbesondere eines Integralträgers, ist.
